# EUROPÄISCHE PATENTSCHRIFT

(11) **EP 3 239 538 B1**
(45) Veröffentlichungstag und Bekanntmachung des Hinweises auf die Patenterteilung: **27.01.2021**
(21) Anmeldenummer: 17167916.0
(22) Anmeldetag: 25.04.2017
(51) Int. Cl.: F16B 7/04

(54) **KLEMMELEMENT**
CLAMPING ELEMENT
ÉLÉMENT DE SERRAGE

(30) Priorität: 27.04.2016 DE 102016107771
(43) Veröffentlichungstag der Anmeldung: 01.11.2017
(73) Patentinhaber: Bilsing Automation GmbH, 57439 Attendorn (DE)
(72) Erfinder: Bilsing, Alfred, 57439 Attendorn (DE)
(74) Vertreter: Boult Wade Tennant LLP

(56) Entgegenhaltungen:
- EP-A2- 1 607 638
- WO-A1-2009/091299
- US-A1- 2008 226 389

## Beschreibung

Die Erfindung betrifft gemäß dem Oberbegriff von Anspruch 1 ein Klemmelement zur Verbindung von Tragrohren oder -stangen von Greif- und Handlingsystemen im Karosserierohbau, wobei ein Mittelteil starr zueinander angeordnete Halbschalen aufweist, die mit entsprechend ausgebildeten, halbschalenförmigen Deckeln verschließbar sind, so dass zwischen den Deckeln und den Halbschalen des Mittelteils die Tragrohre oder -stangen verklemmbar sind.

Derartige Klemmelemente werden beim Aufbau von teilweise sehr komplexen und räumlich großen Greifsystemen verwendet, um die in einem Winkel - meist rechtwinklig - zueinander angeordneten Tragrohre oder Tragstangen fest miteinander zu verbinden, die die eigentlichen Greifer, Schläuche und weitere notwendige oder optionale Elemente halten. Tragrohre sind aufgrund ihres geringeren Gewichts sehr weit verbreitet, wobei sowohl kreisrunde als auch polygonale Querschnitte häufig verbreitet sind.

Übliche Bauformen der entsprechend ihrer Beschaffenheit als Kreuzverbinder zum Einsatz kommenden Klemmelemente sehen einen massiven Metallblock als Mittelteil vor, in welchen die beiden Halbschalen zum Verklemmen der Tragrohre eingearbeitet sind. Diese Lösung ist zwar bewährt, weil sie durch die massiven Mittelteile die sehr hohen Anforderungen an die Formstabilität erfüllt, die die Fertigungsqualität unmittelbar beeinflusst, hat aber den Nachteil, dass die Klemmelemente ein sehr hohes Eigengewicht haben. Dies stellt im Hinblick auf die immer kürzer geforderten Taktzeiten ein Problem dar, da ein das Greifsystem mit entsprechenden Klemmelementen handhabender Roboter diese Massen in immer geringeren Taktzeiten über vorgegebene Wege beschleunigen und abbremsen muss. Die Roboter stoßen dabei insbesondere bei großen Greifsystemen, wie sie z.B. für die Handhabung von großen Blechteilen zum Einsatz kommen müssen, an ihre Grenzen und müssen mit Überlast betrieben, wodurch ihre Standzeit leidet, oder durch leistungsfähigere Exemplare ersetzt werden. Beide Lösungen sind teuer.

Beispiele für Klemmelemente der eingangsgenannten Art sind in der DE 103 23 569 B4 beschrieben, das aus zwei massiven Halbschalen als Deckel und einem massiven Mittelblock mit um 90° zueinander ausgebildeten Halbschalen aufweist. Um eine hinreichende Torsionssteifigkeit aufzubauen, ist eine gewisse Mindestlänge der Halbschalen erforderlich, die insbesondere bei dem Mittelblock zu einem erheblichen Anstieg der zu bewegenden Massen und damit den Trägheitskräften im dynamischen Betrieb führt.

Die US 9,200,654 B1 zeigt ein Klemmelement einer Verkehrsleiteinrichtung zum kreuzweisen Verklemmen von Rohren mit unterschiedlichen Durchmessern. Die Befestigung des größeren Rohres in der Art einer Bandschelle ist für Präzisionsanwendungen wie im vorliegenden Fall ungeeignet.

WO 2009/091299 A1 beschreibt ein Klemmelement zur Befestigung von Rohren oder Stangen, beispielweise für Greifsysteme in der Automobilindustrie.

US 2008/226389 A1 offenbart ebenfalls eine Klemmanordnung für Rohre oder Stangen.

Die Aufgabe der Erfindung besteht darin, Klemmelemente mit möglichst geringem Gewicht auszuführen, um die dynamischen Kräfte beim Handling eines Greifsystems zu senken und den Einsatz kleinerer Robotersysteme zu ermöglichen, wobei die Anforderungen an die Formstabilität eingehalten werden müssen.

Erfindungsgemäß wird die Aufgabe dadurch gelöst, dass bei einem Klemmelement der eingangs genannten Art das Mittelteil vier in zwei Paaren jeweils fluchtend angeordnete Halbschalen aufweist, die mit wenigstens einem zusätzlichen Verbindungselement verbunden sind, welches aus einem Rohr- oder Stangenkörper besteht.

Es hat sich gezeigt, dass sich trotz der zusätzlichen Verbindungselemente das Gewicht der Klemmelements erheblich reduzieren lässt, weil ein konstruktiver Spielraum zu Gewichtsoptimierung bei der Verbindung der Halteschalen gegeben ist. Diese selbst sind im Abstand paarweise für jedes Tragrohr ausgebildet, wodurch sich eine verbesserte Steifigkeit bei einer Torsionsbeanspruchung des Klemmelements ergibt.

Vorzugsweise sind die Verbindungselement derart ausgebildet, ein erstes Verbindungselement ein erstes Ende einer ersten Halbschale eines ersten Paares mit dem ersten Ende einer dritten Halbschale aus dem zweiten Paar, ein zweites Verbindungselement das zweite Ende der dritten Halbschale aus dem zweiten Paar mit dem ersten Ende der zweiten Halbschale des ersten Paares, ein drittes Verbindungselement das zweite Ende der zweiten Halbschale des ersten Paares mit einem ersten Ende der vierten Halbschale aus dem zweiten Paar und das vierte Verbindungselement das zweite Ende der vierten Halbschale aus dem zweiten Paar mit dem zweiten Ende der ersten Halbschale des ersten Paares verbindet.

Diese Ausgestaltung bietet den Vorteil, dass sie aufgrund der Abkehr von einer massiven Bauweise eine Gewichtsersparnis im zweistelligen Prozentbereich erlaubt, wobei die durch das Zusammenwirken der einzelnen Halbschalen mit den Verbindungselementen geschaffene Rahmenstruktur die notwendige Festigkeit zum Erreichen der notwendigen Formstabilität unter dynamischen Bedingungen bereithält. Die Halbschalen jeweils eines Paares können aber auch unter geringfügiger Verschlechterung des Gewichts miteinander verbunden oder einstückig ausgebildet sein.

Erfindungsgemäß ist vorgesehen, dass die Verbindungselemente aus Rohr- oder Stangenkörpern bestehen.

Derartige Verbindungelemente, z.B. in der Form von Bolzen, besitzen eine im Verhältnis zu ihrem Gewicht sehr hohe Steifigkeit und eignen sich daher besonders zum Aufbau der erfindungsgemäßen Klemmelemente. Alternativ können aber auch blockartige Verbindungselemente zum Einsatz kommen. Die Länge der Verbindungselemente bestimmt dabei später den Abstand der sich kreuzenden Tragelemente, wobei im Sinne von kompakt bauenden Greifsystemen und engen Abständen der Tragelemente derart kurze Verbindungselemente bevorzugt sein können, dass die Halbschalen eines Paares in der Projektion jeweils zwischen die beiden Halbschalen des anderen Paares ragen.

Die Verbindungselemente besitzen im Normalfall kreisförmige Querschnitte. Es können aber auch hiervon abweichende Querschnittsformen eingesetzt werden, wie z.B. ovale Querschnitte oder Mehrkantquerschnitte, die unter bestimmten Belastungszuständen vorteilhaft sein können.

In einer bevorzugten Ausführungsform der Erfindung ist vorgesehen, dass die Verbindungselemente von den Halbschalen zunächst getrennt hergestellt und mit den Halbschalen durch geeignete, von der Materialwahl abhängige material-, form- oder kraftschlüssige Verbindungen verbunden sind.

Der grundsätzliche Vorteil dieser Verbindungen besteht darin, dass bereits bei der Herstellung der Klemmelemente die Positionierung der Halbschalen zueinander dauerhaft definiert wird, so dass keine weiteren Einstellungen mehr beim Einbau der Klemmelemente in einem Greifsystem oder dergleichen mehr vorgenommen werden müssen. Dabei kann es durchaus vorteilhaft sein, dass die Verbindungen zwischen den Halbschalen und den Verbindungselementen unlösbar ausgebildet sind, zumal dies bei den bekannten massiven Mittelteilen auch dem Stand der Technik entspricht.

Gegebenenfalls sind die Öffnungsquerschnitte der mit den Deckeln verschlossenen Halbschalen des ersten Paares abweichend von den Öffnungsquerschnitten des zweiten Paares. Diese Maßnahme wird der Fachmann immer dann ergreifen, wenn sich die Querschnitte der sich kreuzenden Tragelemente nicht entsprechen. Insbesondere bei größeren Maßunterschieden kann es zur Vermeidung unnötiger großer Halbschalen von Vorteil sein, wenn die Verbindungselemente wenigstens teilweise eine Kröpfung aufweisen. Das Gewichte der beispielsweise aus Rohrelementen oder Stangenelementen bestehenden Verbindungselemente erhöht sich durch diese Maßnahme nur minimal, während die Halbschalen mit dem kleineren Öffnungsquerschnitt je nach Maß und Querschnittsform beträchtlich kleiner und damit leichter ausgeführt werden können, was im Sinne der Aufgabenstellung der Erfindung von Vorteil ist.

Grundsätzlich können für die Klemmelemente völlig unterschiedliche Werkstoff zum Einsatz kommen, auch Werkstoffkombinationen für die Mittelteile, Verbindungselemente und Deckel sind möglich. Bevorzugte Werkstoffe sind dabei Aluminium (insbesondere als Stranggussprofil für die Halbschalen und Deckel), Stahl oder faserverstärkte Kunststoffe (insbesondere CFK).

Die Art der Verbindungen zwischen den Halbschalen und den Verbindungselementen richtet sich vor allem nach der Art der gewählten Werkstoffe. Metallteile können beispielsweise miteinander verpresst oder verschweißt sein, während für Kunststoff, auch mit Kohlefasern verstärkt, beispielsweise ein Verkleben oder Ultraschallverschweißen zum Einsatz kommen kann.

Bei verpressten Metallteilen kann es von Vorteil sein, wenn sich die einpressten Bereiche im Ausgangszustand vor dem Verpressen zu ihrem freien Ende hin leicht konisch erweitern. Ein Aufweitungswinkel von bis zu 1° ist dabei problemlos realisierbar, wobei die Teile, die die Öffnung tragen, vor dem Verpressen erwärmt und die einzupressenden Teile abgekühlt werden, z.B. durch ein Eintauchen in ein Stickstoffbad.

Bei miteinander verpressten Teilen kann auch das bereits erwähnte Abweichen von der zylindrischen Querschnittsform Vorteile bei der Steifigkeit des Klemmelements unter einer Torsionslast aufzeigen.

In einer weiteren Ausführungsform der Erfindung können die Deckel mit den Halbschalen an beiden Enden verschraubt sein oder der Deckel ist über eine Gelenkverbindung an einem Ende der jeweiligen Halbschale angelenkt und nur einseitig verschraubt. In beiden Fällen ist es bevorzugt, die Tragelemente zwischen den Deckeln und den Halbschalen des Mittelteils unmittelbar miteinander zu verklemmen, so dass keine weiteren Maßnahmen zur Arretierung und - bei kreisrunden Querschnitten - in Drehrichtung erforderlich sind.

Die Gewindebohrungen für die Verschraubungen sind vorzugsweise in den Verbindungselementen ausgebildet, die in Durchgangsbohrungen in den Halbschalen sitzen. Diese Ausführungsform hat den Vorteil, dass die Halbschalen schlank ausgeführt werden können, da in den in der Regel massiv ausgeführten Verbindungselementen, z.B. Verbindungsbolzen oderstangen Vollmaterial über eine ausreichende Länge zur Ausbildung der Gewinde zur Verfügung steht.

Zum Aufbau einer sich beim Anziehen der Klemmschrauben aufbauenden Klemmkraft auf das Tragelement ist es bevorzugt, dass durch einen Abstand zwischen den Halbschalen und dem jeweiligen Deckel ein Klemmweg bereitsteht, so dass es nicht zu einem Anschlagen des Deckels kommt, bevor die notwendigen Klemmkräfte aufgebaut sind.

Vorzugsweise sind die Klemmschrauben zwischen den Aufnahmen und seitlichen Anschlägen angeordnet. Je nach Ausgestaltung können die seitlichen Anschläge den Klemmweg begrenzen, um eine Überbeanspruchung der Teile durch zu hohe Klemmkräfte zu vermieden oder ein Verklemmen durch elastisches Verformen des Deckels zu ermöglichen.

Sehr von Vorteil kann eine an sich bereits bekannte Maßnahme sein, die das Vorsehen einer Kalibrierbohrung in wenigstens einem Deckel vorsieht. Mittels eines Passstiftes kann dann die exakte Lage eines Trageelements wiederhergestellt werden, wenn es z.B. infolge eines Anschlagens des Greifsystems zu einer Verstellung der Einzelelemente relativ zueinander gekommen sein sollte.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine Schrägansicht eines Klemmelements zur Verbindung sich kreuzender Tragelemente;
Fig. 2 eine Schrägansicht eines fertigen Mittelteils sowie ein Explosionsschaubild desselben;
Fig. 3 die verkleinerte Schrägansicht des Klemmelements sowie ein Explosionsschaubild des lösbaren Teils desselben;
Fig. 4 eine Schrägansicht zweier sich kreuzender, identischer Mehrkantrohre mit einem sie verbindenden Klemmelement sowie eine vergrößerte Einzelheit "Z" daraus;
Fig. 5 einen Querschnitt des Klemmelements aus Fig. 1 sowie eine vergrößerte Einzelheit "Z" daraus;
Fig. 6 eine Schrägansicht einer weiteren Ausführungsform eines Klemmelements zur Verbindung sich kreuzender Tragelemente;
Fig. 7 eine Schrägansicht eines fertigen Mittelteils des Klemmelements aus Fig. 6 sowie ein Explosionsschaubild desselben;
Fig. 8 die verkleinerte Schrägansicht des Klemmelements aus Fig. 6 sowie ein Explosionsschaubild der lösbaren Teile desselben;
Fig. 9 eine Schrägansicht zweier sich kreuzender Mehrkantrohre mit unterschiedlichem Querschnitt mit einem sie verbindenden Klemmelement aus Fig. 6 sowie eine vergrößerte Einzelheit "Z" daraus;
Fig. 10 einen Querschnitt des Klemmelements aus Fig. 5 sowie eine vergrößerte Einzelheit "Z" daraus;

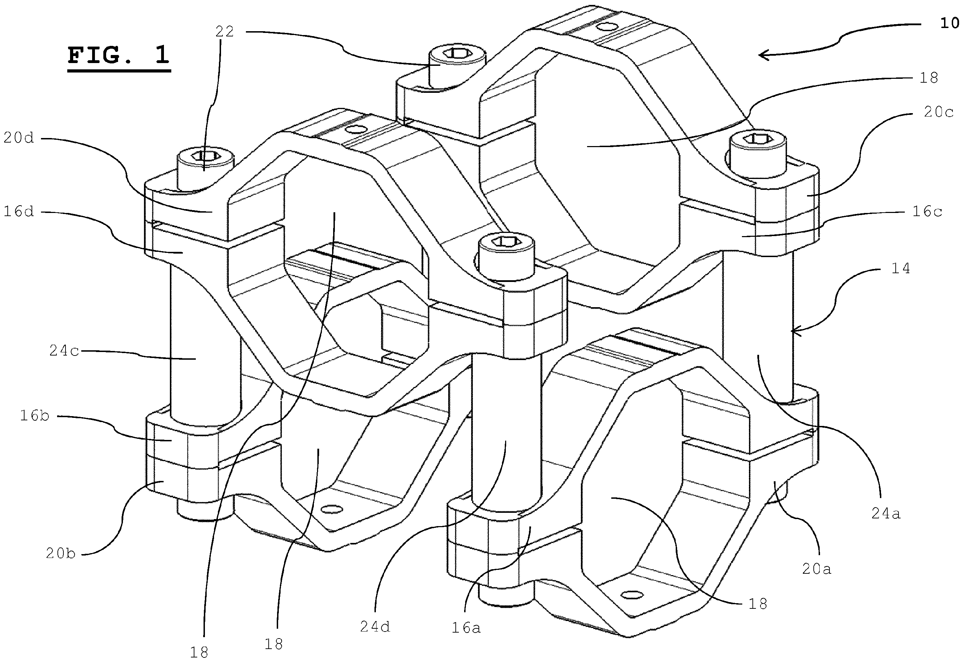

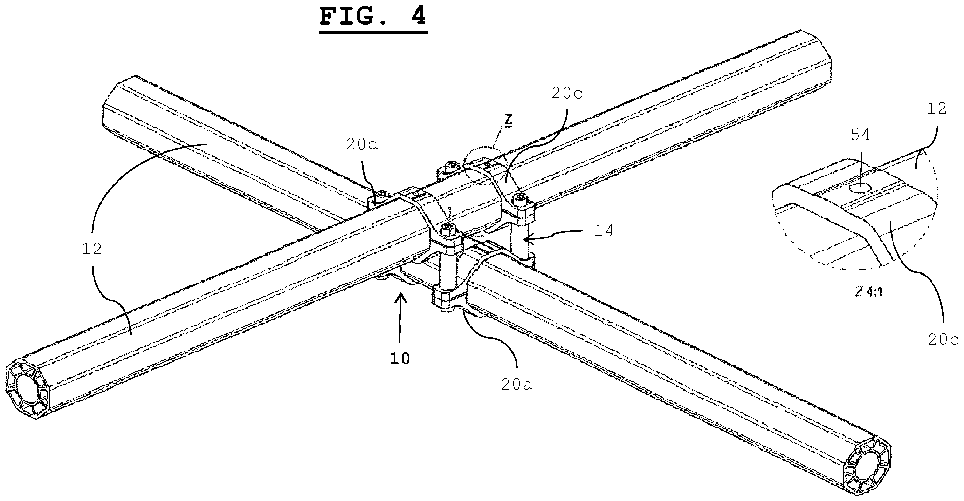

In Fig.1 ist ein Klemmelement 10 gezeigt, das zur kreuzweisen Verbindung von Achtkanttragrohren 12 dient (siehe Fig. 4), wobei zum Verbinden von Tragelementen mit anderen Querschnittsformen im Prinzip gleiche Klemmelemente mit entsprechend angepassten Querschnittsflächen zum Einsatz kommen können.

Das Klemmelement besteht aus einem Mittelteil 14, welches vier Halbschalen 16 a, b, c, d mit an den Profilquerschnitt der Tragrohre 12 angepassten Aufnahmen 18 aufweist. Die Halbschalen 16 a-d sind mit halbschalenförmigen Deckeln 20 a, b, c, d mit entsprechenden Aufnahmen 22 verschlossen, die mit Hilfe von Klemmschrauben 24 die Tragrohre 12 zwischen sich und den Aufnahmen 18 der Halbschalen 16 a-d verklemmen. Hierauf wird später noch näher eingegangen.

Die Halbschalen 16 a-d sind zu zwei Paaren zusammengefasst, innerhalb derer die Halbschalen 16 a, b bzw. 16 c, d fluchtend ausgerichtet sind. Das erste Paar aus Halbschalen 16 a, b ist hier untenliegend gezeigt, während das zweite Paar Halbschalen 16 c, d mit den zugeordneten Deckeln 20 c, d das obere Tragrohr 12 verklemmt. Die beiden Paare Halbschalen 16 a-d sind hier in einem rechten Winkel zueinander angeordnet entsprechend der Lage der in Bezug zueinander festzulegenden Tragrohre 12.

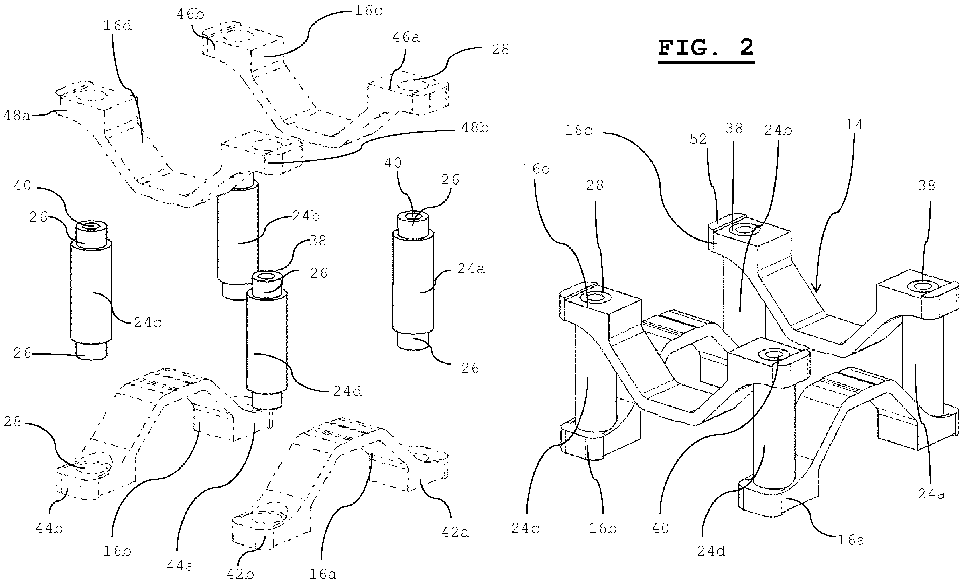

Fig.2 zeigt zum Einen auf der rechten Seite das Mittelteil 14 im montierten Zustand sowie auf der linken Seite der Darstellung ein Explosionsschaubild der Einzelteile mit den vier Halbschalen 16 a-d und vier hier als Verbindungsbolzen 24 a, b, c und d ausgebildeten Verbindungselementen. Die Verbindungsbolzen 24 a-d bestehen hier aus Metall, ebenso wie die Halbschalen 16 a-d, wobei die Halbschalen 16 a-d hier als Aluminiumstrangpressprofil geformt und dann in der gewünschten Breite von diesem abgelängt werden. Die Verbindungsbolzen 24 a-d können als Schmiedeteile aus Aluminium hergestellt sein. Es sind aber auch Varianten der Verbindungselemente und der Halbschalen in Stahl oder Kunststoff möglich.

Wie in Fig. 2 gut zu erkennen ist, sind die Verbindungsbolzen 24 a-d an ihren Enden mit verjüngten zylindrischen Passflächen 26 versehen, die in entsprechend gepasste Durchgangsbohrungen 28 in den Enden der Halbschalen eingepresst werden. Die Presspassungen sind so gewählt, dass die Verbindung später nicht mehr gelöst werden soll (oder kann), wobei in an sich bekannter Weise die Halbschalen vor dem Verpressen erwärmt und/oder die Verbindungsbolzen gekühlt werden können, damit die mit Bezug auf die Bohrungen 28 mit Übermaß ausgeführten zylindrischen Passflächen 26 in die Bohrungen 28 eingefügt werden können.

Wie aus Fig. 2 ebenfalls gut zu erkennen ist, sind die Verbindungbolzen 28 an ihren Stirnflächen 38 mit Gewindebohrungen 40 versehen, in die später die Klemmschrauben 22 eingedreht werden. Auf der rechten Seite von Fig. 2 ist das fertig montierte Mittelteil 14 gezeigt, das einen rahmenartigen Verbund 42 der vier Halbschalen 16 a-d mit den vier Verbindungsbolzen 24 a-d darstellt, die mit den Halbschalen verpresst sind. Ein erstes Verbindungselement 24 a verbindet dabei ein erstes Ende 42a einer ersten Halbschale 16 a des ersten Paares mit einem ersten Ende 46 a einer dritten Halbschale 16 c aus dem zweiten Paar verbindet, ein zweites Verbindungselement 24 b verbindet das zweite Ende 46 b der dritten Halbschale 16 c aus dem zweiten Paar mit einem ersten Ende 44 a der zweiten Halbschale 16 b des ersten Paares, ein drittes Verbindungselement 24 c verbindet das zweite Ende 44 b der zweiten Halbschale 16 b des ersten Paares mit einem ersten Ende 48 a der vierten Halbschale 16 d aus dem zweiten Paar und das vierte Verbindungselement 24 d verbindet das zweite Ende 48 b der vierten Halbschale 16 d aus dem zweiten Paar mit dem zweiten Ende 42 b der ersten Halbschale 16 a des ersten Paares.

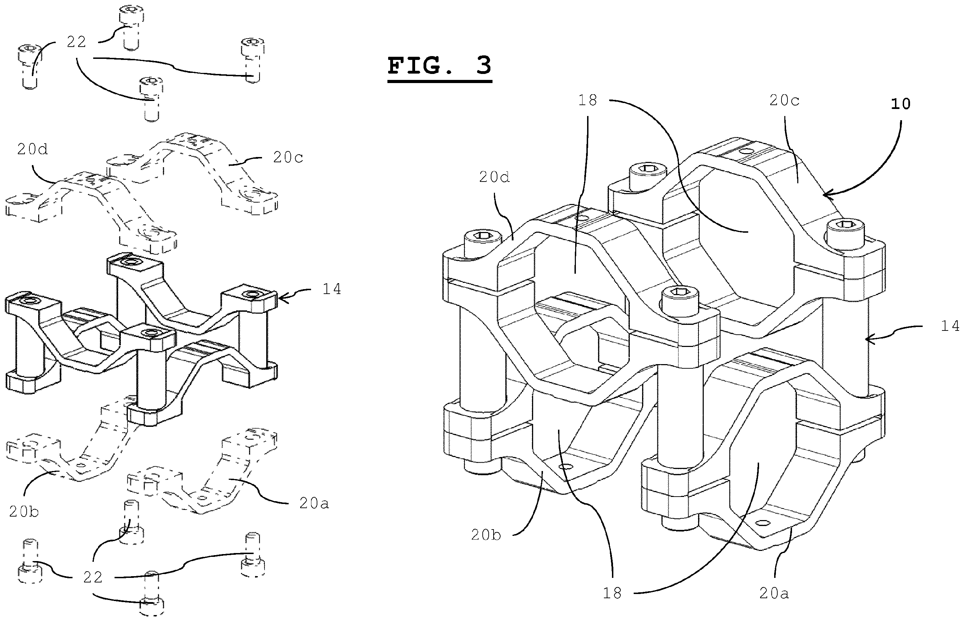

Der abschließende Zusammenbau des als Kreuzverbinder dienenden Klemmelements 10 ist in Fig. 3 veranschaulicht, die auf der rechten Seite eine verkleinerte Darstellung des fertig montierten Klemmelements entsprechend Fig. 1 und auf der linken Seite ein Explosionsschaubild des fertig montierten Mittelteils 14 sowie der Deckel 20 a-d und der zur deren Montage zum Einsatz kommenden Klemmschrauben 22 zeigt.

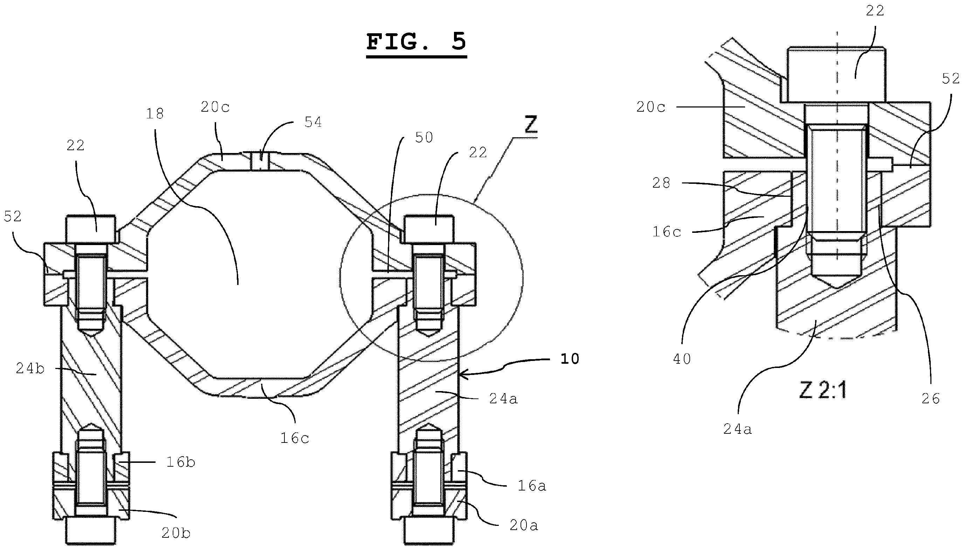

Fig. 4 zeigt eine typische Verwendung des Klemmelements 10 als Kreuzverbinder der beiden bereits erwähnten Tragrohre 12, die hier einen polygonalen Querschnitt, nämlich den bereits erwähnten Achtkantquerschnitt aufweisen. Eine polygonale Querschnittsform hat den Vorteil, dass die Tragrohre 12 in ihrer Umfangrichtung nicht gesondert gegen Verdrehen gesichert werden müssen. In der Längsrichtung sind die Tragrohre 12 durch die Klemmkraft der Deckel 20 a-d an ihrer Außenfläche gehalten, wobei in Fig. 5 ein Querschnitt des Klemmelements 10 durch eine Halbschale 16 c die Ausbildung im Bereich einer Trennfuge 50 zwischen der Halbschale 16 c und ihrem zugehörigen Deckel 20 c veranschaulicht. Wie insbesondere aus der Einzelheit Z gut zu erkennen ist, ist ein Anschlag 52 vorgesehen, über welchen sich der Deckel 20 c an die zugehörige Halteschale 16 c anlegt. Der Anschlag kann als Begrenzung des Klemmweges beim Verklemmen eines Tragrohres 12 zwischen der Halteschale 16 c und dem Deckel 20 c dienen, um eine Überbeanspruchung des verklemmten Tragrohres 12 zu vermeiden, weil der Widerstand beim Eindrehen der Klemmschraube 22 in dem Augenblick stark ansteigt, wenn sich der Deckel 20 c und die Halteschale 16 c am Anschlag 52 aneinanderlegen. Bei einem elastischen Deckel kann auch bei einem weiteren Anziehen der Klemmschraube 22 eine noch höhere Klemmkraft eingestellt werden, sofern dies gewünscht ist. Dies lässt sich durch eine Abstimmung der Geometrie des Klemmelements 10 auf das Tragrohr 12 beeinflussen. In Fig. 4 und 5 ist auch eine Referenzbohrung 54 in den Deckel 20 c zu erkennen. Diese hat den Zweck, dass nach dem vollständigen Aufbau und Ausrichten eines Greif- oder Handlingsystems durch die Referenzbohrung 54 eine fluchtende Passbohrung (nicht gezeigt, weil verdeckt) in das Tragrohr 12 eingebracht wird. Wenn das System später zerlegt werden muss, um z.B. einzelne Teile auszutauschen oder einen Verzug zu korrigieren, der sich infolge eines Unfalles eingestellt hat, weil das Greifsystem versehentlich gegen einen festen Widerstand gefahren worden ist, kann mittels eines Passstiftes das Tragrohr 12 erneut korrekt in Bezug auf das Klemmelement 10 ausgerichtet werden, ohne dass ein Ausmessen des gesamten Systems erforderlich wäre.

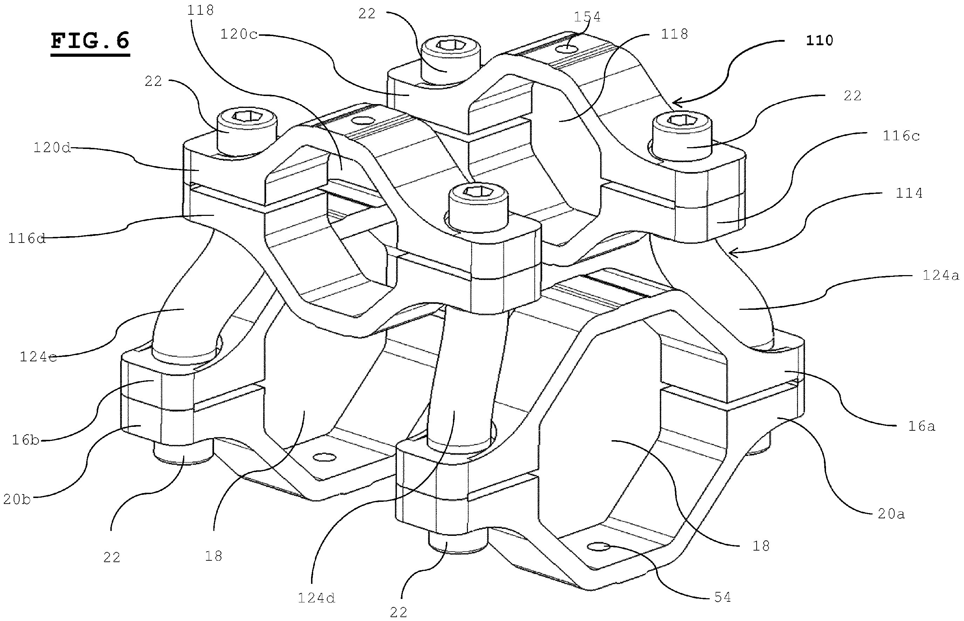

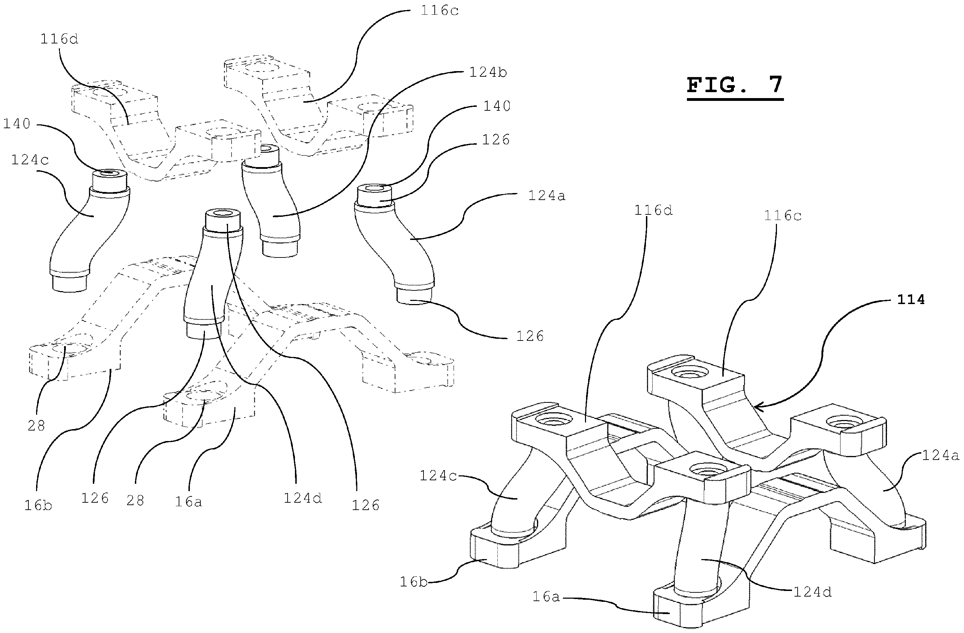

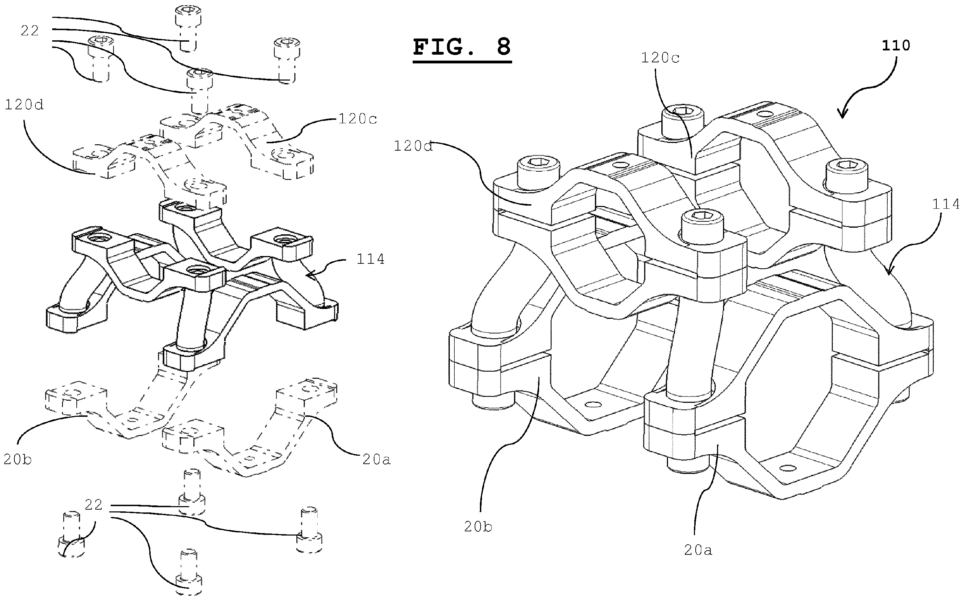

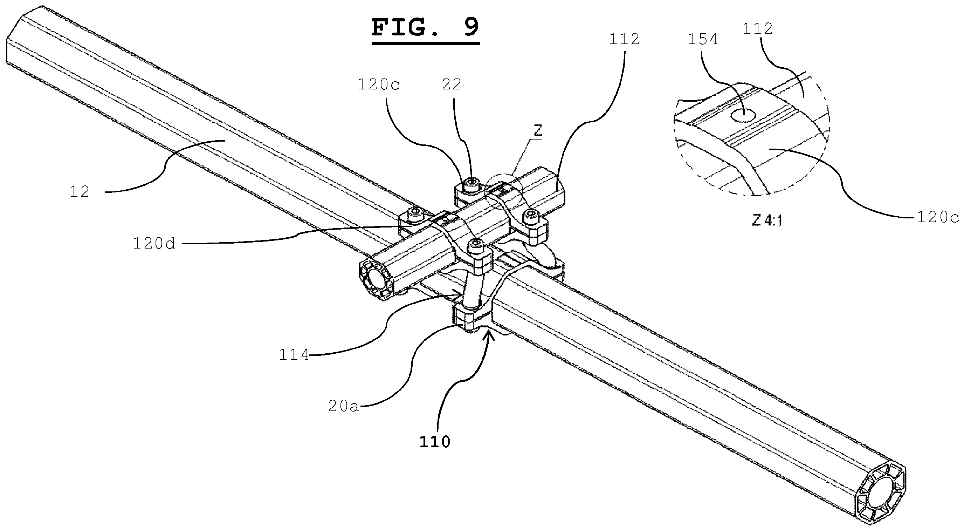

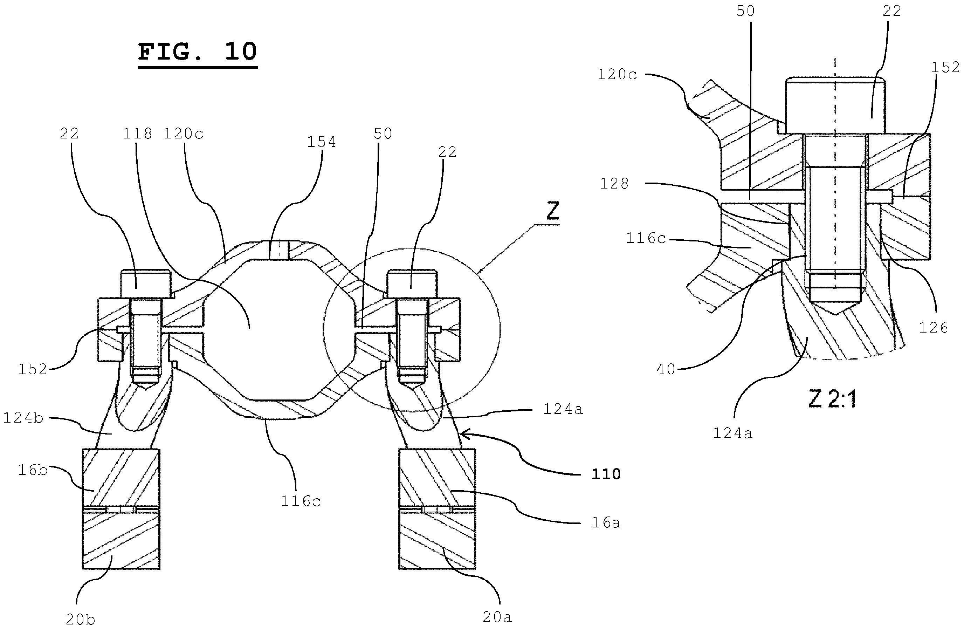

In Fig. 6 bis 10 ist eine weitere Ausführungsform eines Klemmelements 110 gezeigt, das dazu geeignet ist, zwei Tragrohre 12, 112 mit Achtkantquerschnitt mit unterschiedlichem Durchmesser miteinander zu verbinden (siehe Fig. 9). Dabei entsprechen die unteren Halbschalen 16 a und 16 b denen des zuvor beschriebenen Klemmelements aus Fig. 1 bis 5. Um ein möglichst geringes Gesamtgewicht zu erreichen, sind die oberen Halteschalen 116 c und 116 d nicht nur mit einem kleineren Innenquerschnitt 118 ausgebildet, sondern auch insgesamt verkürzt ausgeführt sind. Um diese verkürzte Bauweise zu ermöglichen, ist das Mittelteil 114 zur Verbindung der größeren Halbschalen 16 a, b mit den kleineren Halbschalen 16 c, d mit gekröpften Verbindungselementen 124 a-d ausgebildet, die beispielsweise als Schmiedeteil aus einer Aluminiumlegierung gefertigt sind. Die kleineren, oberen Halbschalen 116 c und d sind den größeren Halbschalen entsprechend aufgebaut, so dass eine nähere Beschreibung hier entfallen kann.

Die Erfindung ist nicht auf eine der vorbeschriebenen Ausführungsformen beschränkt, sondern in vielfältiger Weise abwandelbar, wobei einige mögliche Varianten beispielhaft kurz vorgestellt werden.

Wie bereits erwähnt, können verschiedene Werkstoffe zum Einsatz kommen. Neben den metallischen Werkstoffen, wie z.B. den Aluminiumlegierungen der zuvor beschriebenen Ausführungsformen, sind Kohlefaserverbundwerkstoffe als besonders vorteilhafte Werkstoffe zu erwähnen, weil sie ein sehr geringes Gewicht mit hohen Festigkeitswerten vereinen. Zum Verbinden der Halbschalen mit den Verbindungselementen können die für derartige Werkstoffe üblichen Fügeverfahren zum Einsatz kommen, wobei neben Ultraschallschweißverfahren das Verkleben hervorgehoben werden sollen.

Die Innenquerschnitte der Halbschalen /Deckel bestimmen sich ausschließlich nach den zu verbindenden Tragrohren, wobei diese so bemessen sein sollten, dass ein Verklemmen der Tragrohre zwischen den Deckeln und den Halbschalen möglich ist. Mit den beschriebenen Klemmelementen ist auch eine Verbindung von Tragrohren mit kreisförmigem Querschnitt möglich, wobei hierzu lediglich die Querschnitte der Halbschalen und der Deckel entsprechend halbkreisförmig auszuführen sind.

Während die gezeigten Ausführungsformen eine rechtwinklige Verbindung von sich kreuzenden Tragrohren vorsehen, was in der Mehrzahl der Anwendungsfälle zweckmäßig ist. Selbstverständlich sind aber auch andere Kreuzungswinkel möglich, indem die Halbschalen des oberen Paares durch geeignete Verbindungselemente in einem anderen Winkel zu den Halbschalen des unteren Paares ausgerichtet werden.

Varianten, bei den die Kreuzungswinkel und / oder der Abstand der Paare aus Halbschalen zueinander einstellbar sind, sind möglich aber in der Regel nicht erforderlich, zumal die Formstabilität am besten durch starre Verbindungen bei geringem Gewicht erreicht wird.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Klemmelement
- 12: Tragrohr/Tragelement
- 14: Mittelteil
- 16a, b, c und d: Halbschalen
- 18, 118: Aufnahme für Tragelemente
- 20a, b, c und d: Deckel
- 22: Klemmschrauben
- 24a, b, c und d: Verbindungsbolzen/Verbindungselemente
- 26: Passflächen
- 28: Durchgangsbohrungen
- 38: Stirnflächen
- 40: Gewindebohrungen
- 42a: Erstes Ende der ersten Halbschale
- 42b: Zweites Ende der ersten Halbschale
- 44a: Erstes Ende der zweiten Halbschale
- 44b: Zweites Ende der zweiten Halbschale
- 46a: Erstes Ende der dritten Halbschale
- 46b: Zweites Ende der dritten Halbschale
- 48a: Erstes Ende der vierten Halbschale
- 48b: Zweites Ende der vierten Halbschale
- 50: Trennfuge
- 52: Anschläge
- 54: Referenzbohrung
- 110: Klemmelement
- 112: Tragrohr/Tragelement
- 114: Mittelteil
- 116c, d: Halbschalen
- 120c, d: Deckel
- 124a, b, c und d: Verbindungsbolzen/Verbindungselemente
- 126: Passflächen
- 128: Durchgangsbohrungen
- 152: Anschläge
- 154: Referenzbohrung

## Patentansprüche

1. Klemmelement zur Verbindung von Tragrohren (12; 112) oder -stangen von Greif- und Handlingsystemen im Karosserierohbau, wobei ein Mittelteil (14; 114) starr zueinander angeordnete Halbschalen (16a, b, c, und d; 116c und d) aufweist, die mit entsprechend ausgebildeten, halbschalenförmigen Deckeln (20a, b, c und d; 120c, d) verschließbar sind, so dass zwischen den Deckeln und den Halbschalen des Mittelteils die Tragrohre (12; 112) oder -stangen verklemmbar sind, wobei das Mittelteil (14; 114) vier, in zwei Paaren jeweils fluchtend angeordnete Halbschalen (16a, b, c und d; 116c, d) aufweist, die mit wenigstens einem zusätzlichen Verbindungelement (24a, b, c, d; 124a, b, c, d) verbunden sind, welches aus einem Rohr- oder Stangenkörper besteht.

2. Klemmelement nach Anspruch 1, **dadurch gekennzeichnet, dass** die Halbschalen (16a, b, c, d; 116a, b, c, d) mit Hilfe von vier Verbindungselementen (24a, b, c, d; 124a, b, c, d) verbunden sind, wobei ein erstes Verbindungselement (24a; 124a) ein erstes Ende (42a) einer ersten Halbschale (16a) eines ersten Paares mit dem ersten Ende (46a) einer dritten Halbschale (16c; 116c) aus dem zweiten Paar, ein zweites Verbindungselement (24; 124b) das zweite Ende (46b) der dritten Halbschale (16c; 116c) aus dem zweiten Paar mit dem ersten Ende (44a) der zweiten Halbschale (16b) des ersten Paares, ein drittes Verbindungselement (24c; 124c) das zweite Ende (44b) der zweiten Halbschale 16b) des ersten Paares mit einem ersten Ende (48a) der vierten Halbschale (16d; 116d) aus dem zweiten Paar und das vierte Verbindungselement (24d; 124d) das zweite Ende (48b) der vierten Halbschale (16d; 116d) aus dem zweiten Paar mit dem zweiten Ende (42b) der ersten Halbschale (16a) des ersten Paares verbindet.

3. Klemmelement nach einem der Ansprüche 1 bis 2, **dadurch gekennzeichnet, dass** die Verbindungselemente (24a, b, c, d; 124a, b, c, d) von den Halbschalen (16a, b, c, d; 116c, d) zunächst getrennt hergestellt und mit den Halbschalen (16a, b, c, d; 116c, d) durch geeignete, von der Materialwahl abhängige material-, form- oder kraftschlüssige Verbindungen verbunden sind.

4. Klemmelement nach Anspruch 3, **dadurch gekennzeichnet, dass** die Verbindungen unlösbar ausgebildet sind.

5. Klemmelement nach einem der vorhergehenden Ansprüche, **dadurch gekennzeichnet, dass** die beiden Paare von Halbschalen (16a, b, c, d; 116c, d) in einem rechten Winkel zueinander angeordnet sind.

6. Klemmelement nach einem der vorgehenden Ansprüche, **dadurch gekennzeichnet, dass** die Halbschalen (16a, b, c, d; 116c, d) eines Paares in der Projektion jeweils zwischen die beiden Halbschalen des anderen Paares ragen.

7. Klemmelement nach einem der vorhergehenden Ansprüche, **dadurch gekennzeichnet, dass** die Öffnungsquerschnitte der mit den Deckeln (20a, b) verschlossenen Halbschalen (16a, b) des ersten Paares abweichend von den Öffnungsquerschnitten des zweiten Paares sind.

8. Klemmelement nach Anspruch 7, **dadurch gekennzeichnet, dass** wenigsten ein Verbindungselement (124a, b, c, d) wenigstens eine Kröpfung aufweist.

9. Klemmelement nach einem der vorhergehenden Ansprüche, **dadurch gekennzeichnet, dass** die Verbindungselemente (24a, b, c, d; 124a, b, c, d) in entsprechend ausgeführten Bohrungen (28; 128) in den Enden (42a, b, 44a, b, 46a, b, 48a, b) der Halbschalen (16a, b, c, d; 116c, d) verpresst oder in sonstiger Weise eingefügt sind, wobei die Halbschalen und die Verbindungselemente bei verpressten Verbindungen aus Metall bestehen, wobei vorzugsweise eingepresste oder in sonstiger Weise eingefügte Bereiche der Verbindungselemente (24a, b, c, d; 124 a, b, c, d) vor dem Einpressen sich leicht zum freien Ende hin konisch aufweitend ausgebildet sind.

10. Klemmelement nach Anspruch 9, **dadurch gekennzeichnet, dass** die Verbindungselemente (24a, b, c, d; 124a, b, c, d) im Bereich der eingepressten eingefügten Bereiche, zwischen den eingepressten Bereichen oder über ihre gesamte Länge einen kreisförmigen, ovalen oder mehrkantförmigen Querschnitt besitzen.

11. Klemmelement nach einem der Ansprüche 1 bis 10, **dadurch gekennzeichnet, dass** die Halbschalen und/oder die Verbindungselemente aus Kohlefaserverbundwerkstoffen bestehen und miteinander verklebt oder verschweißt sind.

12. Klemmelement nach einem der vorhergehenden Ansprüche, **dadurch gekennzeichnet, dass** die Deckel (20a, b, c, d; 120c, d) mit den Halbschalen (16a, b, c, d; 116c, d) an beiden Enden verschraubt sind oder der Deckel über eine Gelenkverbindung an einem Ende der jeweiligen Halbschale angelenkt ist, wobei vorzugsweise Gewindebohrungen (40) für die Verschraubungen in den Verbindungselementen (24a, b, c, d; 124a, b, c, d) ausgebildet sind, die in Durchgangsbohrungen (28;128) in den Enden der Halbschalen (16a, b, c, d; 116c, d) sitzen.

13. Klemmelement nach einem der vorhergehenden Ansprüche, **dadurch gekennzeichnet, dass** Klemmschrauben (22) zwischen den Aufnahmen der Halbschalen und seitlichen Auflagern (52, 152) angeordnet sind.

14. Klemmelement nach Anspruch 13, **dadurch gekennzeichnet, dass** ein Klemmweg durch einen Abstand (50) zwischen den Halbschalen (16a, b, c, d; 116c, d) und dem jeweiligen Deckel (20a, b, c, d; 120c, d) im Bereich der Klemmschrauben (22) bereitsteht.

15. Klemmelement nach einem der vorhergehenden Ansprüche, **dadurch gekennzeichnet, dass** wenigstens ein Deckel (20a, b, c, d; 120c, d) pro Paar mit einer Referenz-/Kalibrierbohrung (54; 154) versehen ist.

## Claims

1. Clamping element for connecting support tubes (12; 112) or rods of gripping and handling systems in body shell construction, wherein a middle part (14; 114) has half-shells (16a, b, c, and d; 116c and d) which are arranged rigidly relative to one another and can be closed by means of correspondingly formed, half-shell-shaped covers (20a, b, c and d; 120c, d), so that the support tubes (12; 112) or rods can be clamped between the covers and the half-shells of the middle part, wherein the middle part (14; 114) has four half-shells (16a, b, c and d; 116c, d) which are arranged in two pairs in alignment with one another and are connected by means of at least one additional connecting element (24a, b, c, d; 124a, b, c, d) which consists of a tube or rod body.

2. Clamping element according to claim 1, **characterised in that** the half-shells (16a, b, c, d; 116a, b, c, d) are connected by means of four connecting elements (24a, b, c, d; 124a, b, c, d), wherein a first connecting element (24a; 124a) connects a first end (42a) of a first half-shell (16a) of a first pair to the first end (46a) of a third half-shell (16c; 116c) from the second pair, a second connecting element (24; 124b) connects the second end (46b) of the third half-shell (16c; 116c) from the second pair to the first end (44a) of the second half-shell (16b) of the first pair, a third connecting element (24c; 124c) connects the second end (44b) of the second half-shell (16b) of the first pair to a first end (48a) of the fourth half-shell (16d; 116d) from the second pair and the fourth connecting element (24d; 124d) connects the second end (48b) of the fourth half-shell (16d; 116d) from the second pair to the second end (42b) of the first half-shell (16a) of the first pair.

3. Clamping element according to any of claims 1 to 2, **characterised in that** the connecting elements (24a, b, c, d; 124a, b, c, d) are initially produced separately from the half-shells (16a, b, c, d; 116c, d) and connected to the half-shells (16a, b, c, d; 116c, d) by suitable material-fitting, form-fitting or force-fitting connections depending on the choice of material.

4. Clamping element according to claim 3, **characterised in that** the connections are non-detachable.

5. Clamping element according to any of the preceding claims, **characterised in that** the two pairs of half-shells (16a, b, c, d; 116c, d) are arranged at right angles to one another.

6. Clamping element according to any of the preceding claims, **characterised in that** the half-shells (16a, b, c, d; 116c, d) of one pair protrude in the projection between the two half-shells of the other pair.

7. Clamping element according to any of the preceding claims, **characterised in that** the opening cross-sections of the half-shells (16a, b) of the first pair which are closed by means of the covers (20a, b) differ from the opening cross-sections of the second pair.

8. Clamping element according to claim 7, **characterised in that** at least one connecting element (124a, b, c, d) has at least one crank.

9. Clamping element according to any of the preceding claims, **characterised in that** the connecting elements (24a, b, c, d; 124a, b, c, d) are pressed or otherwise inserted in correspondingly designed bores (28; 128) in the ends (42a, b, 44a, b, 46a, b, 48a, b) of the half-shells (16a, b, c, d; 116c, d), wherein the half-shells and the connecting elements consist of metal in the case of pressed connections, wherein preferably pressed-in or otherwise inserted regions of the connecting elements (24a, b, c, d; 124a, b, c, d) are designed to widen conically slightly towards the free end before being pressed in.

10. Clamping element according to claim 9, **characterised in that** the connecting elements (24a, b, c, d; 124a, b, c, d) have a circular, oval or polygonal cross-section in the region of the pressed-in inserted regions, between the pressed-in regions or over their entire length.

11. Clamping element according to any of claims 1 to 10, **characterised in that** the half-shells and/or the connecting elements consist of carbon fibre composite materials and are glued or welded to one another.

12. Clamping element according to any of the preceding claims, **characterised in that** the covers (20a, b, c, d; 120c, d) are screwed to the half-shells (16a, b, c, d; 116c, d) at both ends or the cover is articulated to one end of the respective half-shell via an articulated joint, preferably threaded bores (40) for the screw connections being formed in the connecting elements (24a, b, c, d; 124a, b, c, d), which threaded bores are seated in through bores (28; 128) in the ends of the half-shells (16a, b, c, d; 116c, d).

13. Clamping element according to any of the preceding claims, **characterised in that** the clamping screws (22) are arranged between the receptacles of the half-shells and lateral supports (52, 152).

14. Clamping element according to claim 13, **characterised in that** a clamping travel is available through a spacing (50) between the half-shells (16a, b, c, d; 116c, d) and the respective cover (20a, b, c, d; 120c, d) in the region of the clamping screws (22).

15. Clamping element according to any of the preceding claims, **characterised in that** at least one cover (20a, b, c, d; 120c, d) per pair is provided with a reference/calibration bore (54; 154).

## Revendications

1. Élément de serrage pour connecter des tubes de support (12 ; 112) ou barres de support de systèmes de préhension et de manutention dans la carrosserie brute, dans lequel une partie centrale (14 ; 114) présente des demi-coques (16a, b, c et d ; 116c et d) disposées de manière rigide les unes par rapport aux autres, qui peuvent être fermées par des couvercles (20a, b, c et d ; 120c, d) en forme de demi-coques de forme correspondante, de sorte que les tubes de support (12 ; 112) ou tiges de support peuvent être serrés entre les couvercles et les demi-coques de la partie centrale, dans laquelle la partie centrale (14 ; 114) présente quatre demi-coques (16a, b, c et d ; 116c, d) sont disposées respectivement en deux paires alignées et qui sont reliées à au moins un élément de connexion supplémentaire (24a, b, c, d ; 124a, b, c, d) qui consiste en un corps de tube ou de tige.

2. Élément de serrage selon la revendication 1, **caractérisé en ce que** les demi-coques (16a, b, c, d ; 116a, b, c, d) sont connectées au moyen de quatre éléments de connexion (24a, b, c, d ; 124a, b, c, d), dans lequel un premier élément de connexion (24a ; 124a) connecte une première extrémité (42a) d'une première demi-coque (16a) d'une première paire à la première extrémité (46a) d'une troisième demi-coque (16c ; 116c) de la deuxième paire, un deuxième élément de connexion (24 ; 124b) connecte la deuxième extrémité (46b) de la troisième demi-coque (16c ; 116c) de la deuxième paire à la première extrémité (44a) de la deuxième demi-coque (16b) de la première paire, un troisième élément de connexion (24c ; 124c) connecte la deuxième extrémité (44b) de la deuxième demi-coque (16b) de la première paire à une première extrémité (48a) de la quatrième demi-coque (16d ; 116d) de la deuxième paire, et le quatrième élément de connexion (24d ; 124d) connecte la deuxième extrémité (48b) de la quatrième demi-coque (16d ; 116d) de la deuxième paire à la deuxième extrémité (42b) de la première demi-coque (16a) de la première paire.

3. Élément de serrage selon l'une quelconque des revendications 1 à 2, **caractérisé en ce que** les éléments de liaison (24a, b, c, d ; 124a, b, c, d) sont d'abord fabriqués séparément des demi-coques (16a, b, c, d ; 116c, d) et sont connectés aux demi-coques (16a, b, c, d ; 116c, d) par des connexions adaptées par complémentarité de matériau, de forme ou de force selon le choix du matériau.

4. Élément de serrage selon la revendication 3, **caractérisé en ce que** les connexions sont conçues pour être non détachables.

5. Élément de serrage selon l'une quelconque des revendications précédentes, **caractérisé en ce que** les deux paires de demi-coques (16a, b, c, d ; 116c, d) sont disposées à angle droit l'une à l'autre.

6. Élément de serrage selon l'une quelconque des revendications précédentes, **caractérisé en ce que** les demi-coques (16a, b, c, d ; 116c, d) d'une paire en saillie dépassent chacune entre les deux demi-coques de l'autre paire.

7. Élément de serrage selon l'une quelconque des revendications précédentes, **caractérisé en ce que** les sections d'ouverture des demi-coques (16a, b) de la première paire, qui sont fermées par les couvercles (20a, b), diffèrent des sections d'ouverture de la deuxième paire.

8. Élément de serrage selon la revendication 7, **caractérisé en ce qu'**au moins un élément de connexion (124a, b, c, d) présente au moins un coude.

9. Élément de serrage selon l'une quelconque des revendications précédentes, **caractérisé en ce que** les éléments de connexion (24a, b, c, d ; 124a, b, c, d) sont emboutis ou insérés d'une autre manière dans des alésages (28 ; 128) de conception correspondante dans les extrémités (42a, b, 44a, b, 46a, b, 48a, b) des demi-coques (16a, b, c, d ; 116c, d), dans lesquelles les demi-coques et les éléments de connexion en cas de connexions embouties sont constitués de métal, dans lequel de préférence les zones embouties ou insérées d'une autre manière des éléments de connexion (24a, b, c, d ; 124 a, b, c, d) sont conçues pour s'élargir légèrement en cône vers l'extrémité libre avant l'emboutissage.

10. Élément de serrage selon la revendication 9, **caractérisé en ce que** les éléments de connexion (24a, b, c, d ; 124a, b, c, d) comportent une section transversale circulaire, ovale ou polygonale au niveau des zones insérées embouties, entre les zones embouties ou sur toute leur longueur.

11. Élément de serrage selon l'une quelconque des revendications 1 à 10, **caractérisé en ce que** les demi-coques et/ou les éléments de connexion sont constitués de composites de fibres de carbone et sont collés ou soudés entre eux.

12. Élément de serrage selon l'une quelconque des revendications précédentes, **caractérisé en ce que** les couvercles (20a, b, c, d ; 120c, d) sont vissés aux demi-coques (16a, b, c, d ; 116c, d) aux deux extrémités ou le couvercle est articulé à une extrémité des demi-coques respectives par l'intermédiaire d'une articulation, dans laquelle de préférence des alésages filetés (40) pour les raccords à vis sont formés dans les éléments de connexion (24a, b, c, d ; 124a, b, c, d), qui sont logés dans des alésages traversants (28 ; 128) dans les extrémités des demi-coques (16a, b, c, d ; 116c, d).

13. Élément de serrage selon l'une quelconque des revendications précédentes, **caractérisé en ce que** des vis de serrage (22) sont disposées entre les logements des demi-coques et des supports latéraux (52, 152).

14. Élément de serrage selon la revendication 13, **caractérisé en ce qu'**un trajet de serrage est fourni par un écart (50) entre les demi-coques (16a, b, c, d ; 116c, d) et le couvercle respectif (20a, b, c, d ; 120c, d) au niveau des vis de serrage (22).

15. Élément de serrage selon l'une quelconque des revendications précédentes, **caractérisé en ce qu'**au moins un couvercle (20a, b, c, d ; 120c, d) par paire est doté d'un alésage de référence/calibrage (54 ; 154).
